**Europäisches Patentamt**

**European Patent Office**

**Office européen des brevets**

(11) Numéro de publication : **0 338 902 B1**

(12) ## FASCICULE DE BREVET EUROPEEN

(45) Date de publication du fascicule du brevet :
**03.06.92 Bulletin 92/23**

(51) Int. Cl.⁵ : **G01D 5/26**

(21) Numéro de dépôt : **89401034.7**

(22) Date de dépôt : **14.04.89**

(54) **Capteur de déplacement à fibre optique.**

(30) Priorité : **22.04.88 FR 8805347**

(43) Date de publication de la demande :
**25.10.89 Bulletin 89/43**

(45) Mention de la délivrance du brevet :
**03.06.92 Bulletin 92/23**

(84) Etats contractants désignés :
**DE GB IT NL SE**

(56) Documents cités :
**EP-A- 0 143 583**
**GB-A- 2 184 539**
**US-A- 4 342 907**
**IBM TECHNICAL DISCLOSURE BULLETIN,
vol. 27, no. 6, novembre 1984, page 3622, New
York, US; R.T. HODGSON et al.:
"Positionsensor using fiber-optic interferometer"**

(73) Titulaire : **THOMSON-CSF**
**51, Esplanade du Général de Gaulle**
**F-92800 Puteaux (FR)**

(72) Inventeur : **Turpin, Marc**
**THOMSON-CSF SCPI - CEDEX 67**
**F-92045 Paris la Defense (FR)**
Inventeur : **Brevignon, Michèle**
**THOMSON-CSF SCPI - CEDEX 67**
**F-92045 Paris la Defense (FR)**
Inventeur : **Rojas, Dominique**
**THOMSON-CSF SCPI - CEDEX 67**
**F-92045 Paris la Defense (FR)**

(74) Mandataire : **Grynwald, Albert et al**
**THOMSON-CSF SCPI**
**F-92045 PARIS LA DEFENSE CEDEX 67 (FR)**

# Description

L'invention se rapporte à un capteur de déplacement à fibre optique et notamment à un capteur à fibre optique biréfringente permettant des mesures de déplacements de l'ordre de 50 à 100 mm avec une précision relative atteignant $10^{-3}$. Ce type de capteur peut être utilisé pour des mesures de déplacements linéaires aussi bien que des déplacements angulaires.

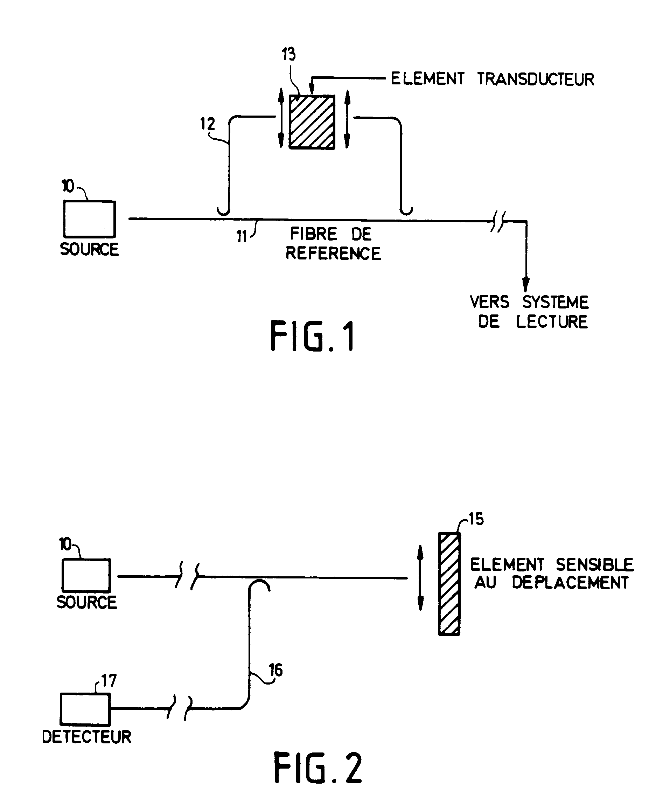

De nombreux capteurs de déplacements utilisant des fibres optiques ont été décrits. Pour la plupart ces capteurs sont de type extrinsèque, à savoir que la ou les fibres utilisées ne constituent pas l'élément transducteur et sont essentiellement utilisées pour le transport de l'information. Des structures de capteurs utilisant le déphasage des ondes se propageant dans une fibre optique ont été proposées et utilisent des montages interférométriques (généralement des interféromètres de Mach-Zehnder). Dans ce type de capteur, tel que représenté en figure 1, une source 10 émet un faisceau de lumière polarisée dans un bras de référence 11 et un bras de mesure 12. Les bras 11 et 12 sont couplés vers un système de lecture et permettent une mesure interférométrique. Le bras 11 du montage interférométrique sert de référence. Un élément transducteur 13 est situé dans le bras de mesure 12. Dans le bras de mesure 12 la fibre optique est généralement interrompue et couplée à un système extérieur lui-même sensible au déplacement. Ces capteurs semblent plus particulièrement adaptés aux mesures de petits déplacement (quelques centaines de micromètres). D'autres capteurs interférométriques ou non utilisent un élément sensible placé en extrémité de fibre (micro interféromètres de Fizeau ou système faisant varier le flux lumineux transmis ou réfléchi). Un tel capteur est représenté en figure 2 avec une source 10 émettant un faisceau lumineux dans une fibre optique 14. La lumière est réfléchie par un élément 15 sensible au déplacement vers une fibre 16 et un détecteur 17. Cependant de tels capteurs permettent de ne mesurer que de faibles déplacements.

L'invention concerne un capteur permettant des mesures de déplacements de grandes amplitudes, atteignant une dizaine de centimètres par exemple avec précision relative importante ($10^{-3}$ par exemple).

De plus, le capteur peut être situé à distance (plusieurs centaines de mètres par exemple) du système de mesure interférométrique sans que les défauts inhérents à la fibre de liaison aient une influence sur la mesure

Enfin, le système de l'invention permet de multiplexer sur une même fibre de mesure plusieurs capteurs permettant ainsi plusieurs mesures d'un même type ou non.

L'invention concerne donc un capteur de déplacements à fibre optique, comportant :

– une source optique de lumière polarisée linéairement selon un axe de polarisation ;
– une fibre optique biréfringente dont une face d'entrée est couplée à la source optique avec un axe de biréfringence aligné sur l'axe de polarisation de la lumière émise par la source optique, cette fibre optique possédant au moins deux points de couplage entre les deux axes de propagation lent et rapide, localisés, fixes et espacés d'une distance déterminée ;
– au moins un moyen de couplage mobile entre les deux axes de propagation lent et rapide, permettant d'induire un couplage, en un point de couplage mobile de la fibre, entre les deux axes de polarisation de la fibre ;
– un moyen d'analyse couplé à la sortie de la fibre et permettant de détecter les interférences dues aux différents couplages induits dans la fibre .

Les différents objets et caractéristiques de l'invention apparaîtront plus clairement dans la description qui va suivre faite à titre d'exemple en se reportant aux figures annexées qui représentent :

– les figures 1 et 2, des exemples de réalisation connus dans la technique et déjà décrits précédemment ;
– la figure 3, un exemple de réalisation simplifié du capteur selon l'invention ;
– la figure 4, un exemple plus complet du capteur selon l'invention ;
– la figure 5, une illustration de la rotation Faraday de la polarisation de la lumière ;
– la figure 6, un diagramme de fonctionnement de la lecture en cohérence du capteur de la figure 4 ;
– la figure 7, une application du capteur de l'invention à un capteur linéaire ;
– la figure 8, une application du capteur de l'invention à un capteur angulaire ;
– la figure 9, une application du capteur de l'invention à un capteur comportant plusieurs points de mesure.

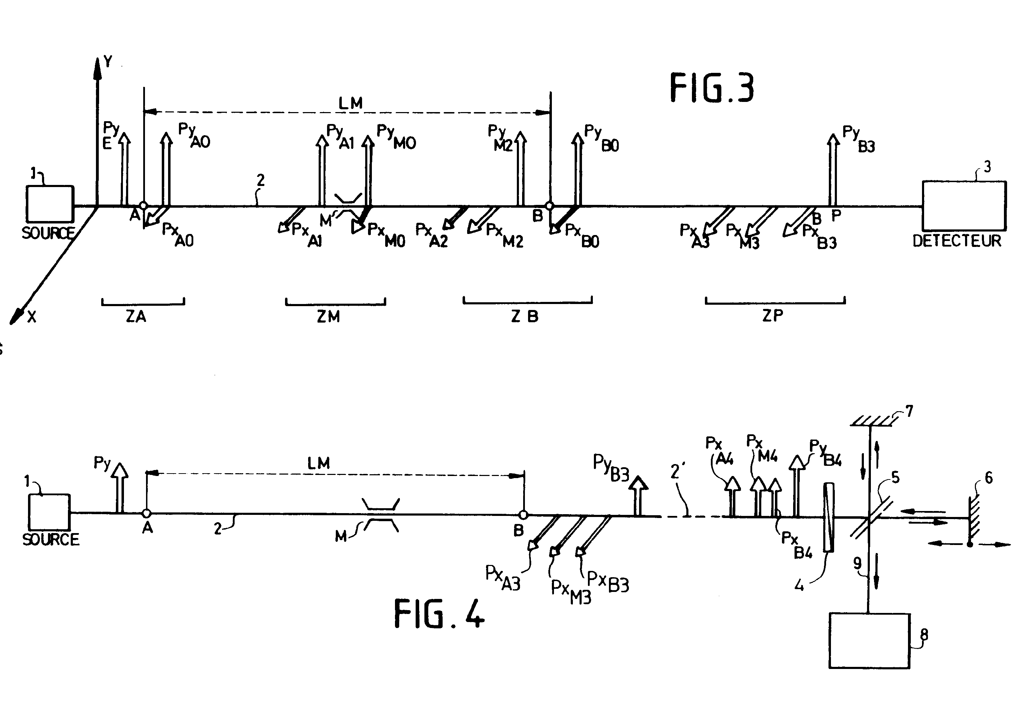

En se reportant à la figure 3, on va tout d'abord décrire un exemple de réalisation simplifié du capteur de déplacement selon l'invention.

Ce capteur est principalement constitué d'une fibre optique monomode 2 à conservation de polarisation linéaire sur laquelle ont été réalisés deux points de couplage A et B entre les deux axes de propagation lent et rapide de la fibre biréfringente. Les deux points de couplage A et B sont fixes et délimitent un segment LM de fibre utile à la mesure pour déterminer les positions relatives d'un troisième point de couplage mobile M situé sur ce segment. La mesure des distances relatives séparant le point de couplage mobile des points de couplages fixes permet de mesurer le déplacement absolu du point de couplage mobile.

Les variations de température entraînent des variations plus ou moins importantes de la biréfringence des fibres, ce qui modifie les différences de chemin optique des ondes polarisées qui s'y propagent, modifiant ainsi virtuellement la longueur séparant deux points de couplage consécutifs. La mesure des deux différences de chemins optiques adjacents et complémentaires définis par les trois points de couplage permet d'effectuer une mesure de longueur en s'affranchissant des problèmes de température. Des fibres à conservation de polarisation linéaire très peu sensibles à la température sont réalisables.

Une fibre monomode à conservation de polarisation linéaire telle que la fibre 2 est en créant une forte biréfringence élasto-optique à partir d'une zone créant des contraintes intrinsèques, dans une fibre monomode. Un exemple classique d'une telle fibre à la structure suivante : deux barreaux extrêmement dopés sont placés de chaque côté du coeur. Au fibrage, les différents verres sont d'abord visqueux puis se solidifient. En se refroidissant jusqu'à la température ambiante les barreaux dopés qui ont un coefficient de dilatation thermique bien supérieur à celui du reste de la structure, se contractent et placent donc la région du coeur en contrainte d'extension. Par effet élasto-optique cette contrainte créé de la biréfringence.

Des fibres biréfringentes peuvent être obtenues avec un coeur de forme élliptique. La dépendance de la biréfringence en fonction de la température, est moindre dans ces fibres.

Cette biréfringence est souvent définie par la longueur de battement $L_B$, c'est à dire la longueur au bout de laquelle les polarisations suivant les deux axes neutres de la fibre, orthogonales, se sont déphasées de 2¶ Radians. Cette longueur est typiquement de l'ordre de 1 à 5 mm.

La fibre 2 possède donc deux axes neutres X et Y.

Selon les indices de propagation de la fibre, l'un des axes, X par exemple, correspond à l'axe de propagation lente et l'autre axe (Y) correspond à l'axe de propagation rapide.

La source 1 émet un faisceau de lumière polarisée linéairement et est couplée à la fibre 2 de façon que la lumière soit polarisée, à l'entrée de la fibre selon une direction de polarisation $Py_E$ qui est parallèle à un axe neutre de la fibre. Sur l'exemple de la figure 3, cette direction de polarisation $Py_E$ est dirigée selon l'axe Y qui est, par exemple, l'axe rapide de la fibre.

Sur une telle fibre, si à un endroit déterminé existe une contrainte particulière ou un défaut, la lumière polarisée selon un axe neutre de la fibre se trouve alors également partiellement polarisée selon l'autre axe neutre de la fibre. On dit qu'il y a couplage de polarisations et qu'il existe un point de couplage. A partir de ce point de couplage, deux trains d'ondes vont se propager dans la fibre, à des vitesses différentes, selon les deux axes de biréfringence.

Les points de couplage fixes A et B peuvent être réalisés de différentes façons. Une méthode intéressante consiste à tordre la fibre élastiquement puis à la chauffer localement au moyen d'un arc électrique, d'un chalumeau, ou d'une source laser. La torsion se relache au point de chauffe, créant ainsi une rotation des axes neutres et donc un couplage localisé, sans pour autant induire de pertes puisque le coeur de la fibre n'est pas interrompu. Ces points de couplage peuvent être créés par d'autre méthodes pour autant qu'ils soient créés à des points fixes, bien localisés et qu'ils ne détruisent pas la continuité du coeur de cette fibre.

Le point de couplage mobile M peut être créé par un dispositif inducteur solidaire de l'élément mobile dont on souhaite mesurer le déplacement. Une solution intéressante est l'utilisation de l'effet Faraday, qui permet d'induire localement une rotation de polarisation équivalente à un point de couplage. Cette solution présente l'avantage d'être non contact et réversible. La rotation Faraday est obtenue à l'aide d'un électro-aimant (ou un aimant permanant), dont l'entrefer de l'ordre quelques centaines de micromètres permet d'obtenir des lignes de champ colinéaires à la fibre optique. La méthode de relecture interférométrique utilisée et décrite plus loin ne nécessite pas des points de couplages forts, ce qui permet d'utiliser des champs magnétiques usuels.

L'angle de rotation Faraday est donné par la relation $\ominus$=V.H.L. La constante de Verdet V pour la silice est de l'ordre de $2.5 \cdot 10^{-6}$ radians/Ampère à la longueur d'onde de 0,84 micromètre. Pour un point de couplage de $10^{-3}$ et une longueur d'interaction de 1 mm, le champ nécessaire est de l'ordre de H=0.5 Tesla.

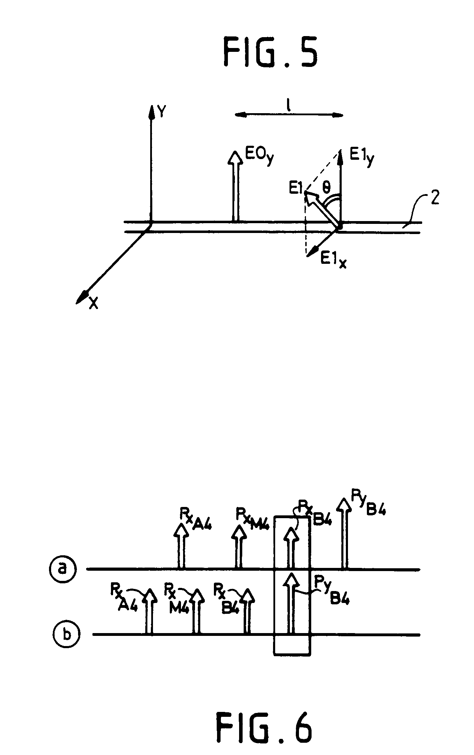

La figure 5 illustre cette rotation Faraday d'un angle $\ominus$ de la polarisation. Une onde polarisée selon la direction $EO_y$ subit une rotation d'angle $\ominus$ sur une longueur I soumise à un champ magnétique H. L'onde polarisée E1 se décompose alors en une onde polarisée E1y et une onde polarisée E1x selon les deux axes neutres de la fibre 1.

Il faut noter que tout autre moyen par exemple mécanique ou thermique, susceptible de créer un point de couplage mobile sur le segment de fibre précédemment défini entre dans le cadre de l'invention.

Pour expliquer le fonctionnement du capteur de l'invention, on a délimité, sur la figure 3, quatre zones ZA, ZM, ZB, ZP de la fibre 2.

La source 1 émet donc, dans la fibre 2, un train d'onde, dont la polarisation $Py_E$, dans la zone ZA avant d'atteindre le point de couplage A, est dirigée selon l'axe rapide Y.

A partir du point de couplage A, deux trains d'ondes vont se propager le long du chemin optique, à des vitesses différentes, selon les deux axes de biréfringence X et Y. Dans la zone ZA après le point de couplage A, on a donc deux trains d'ondes : un train d'onde primaire (rapide) polarisé selon $Py_{AO}$ et un premier train d'onde couplé (lent) polarisé selon $Px_{AO}$.

Ces deux trains d'ondes atteignent la zone ZM. La vitesse de propagation selon l'axe de biréfringence X étant plus faible que la vitesse selon l'axe Y, le train d'onde polarisé selon $Py_{A1}$ (correspondant à $Py_{AO}$) atteint la zone ZM avant le train d'onde polarisé selon $Px_{A1}$ (correspondant à $Px_{AO}$). Au point de couplage mobile M le train d'onde primaire polarisé selon $Py_{A1}$ subit un couplage de polarisation et donne lieu à un train d'onde primaire polarisé selon $Py_{MO}$ (selon l'axe rapide Y) et un deuxième train d'onde couplé polarisé selon $Px_{MO}$.

Dans la zone ZB, avant d'atteindre le point de couplage B, le train d'onde primaire ($Py_{M2}$) est en avance sur le deuxième train d'onde couplé ($Px_{M2}$), lequel est en avance sur le premier train d'onde couplé ($Px_{A2}$). Au point de couplage fixe B, le train d'onde $Py_{M2}$ donne lieu au lieu train d'onde primaire $Py_{BO}$ et un train d'onde couplé $Px_{BO}$.

Dans la zone ZP qui précède immédiatement l'entrée du détecteur 3, le train d'onde primaire $Py_{B3}$ est en avance sur le troisième train d'onde couplé $Px_{B3}$ créé au deuxième point de couplage fixe B, lequel est en avance sur le deuxième train d'onde couplé $Px_{M3}$ qui a été créé au point de couplage mobile M, ce deuxième train d'onde couplé $Px_{M3}$ étant lui même en avance sur le premier train d'onde couplé $Px_{A3}$ qui a été crée au premier point de couplage fixe A.

Le détecteur 3 reçoit ainsi ces quatre trains d'ondes. Il détecte les positions dans le temps de ces différents trains d'ondes et en déduit la position relative du deuxième train d'onde couplé $Px_{M3}$ par rapport au premier train d'onde couplé $Px_{A3}$ et au troisième train d'onde couplé $Px_{B3}$. Cette position relative donne la position relative du point de couplage mobile M par rapport aux deux points de couplage fixes A et B ce qui permet de situer le point M sur la longueur de fibre optique LM.

Le détecteur 3 permet d'effectuer une mesure de type interféromètrique. Par définition, la biréfringence linéaire B d'une fibre optique est donnée par l'intermédiaire de la longueur de battement Lb (longueur de fibre nécessaire pour obtenir un déphasage de $2\P$ entre les deux modes de propagation de polarisations croisées). Les relations qui lient les différents paramètres sont données ci-dessous :

$$- B = n_x - n_y \qquad L_B = \lambda/B$$

avec

– $\lambda$: longueur d'onde,
– $n_x$ et $n_y$ étant les indices de réfraction suivant chaque axe de polarisation.

Il apparaît immédiatement que le déplacement d'un point de couplage mobile d'une longueur de fibre égale à Lb entraîne le passage d'une frange d'interférence donc un déplacement d'une longueur d'onde dans un interféromètre en propagation libre dans l'air.

Selon l'invention, on prévoit une source lumineuse ayant une faible cohérence (de l'ordre de quelque dizaines de longueurs d'onde par exemple), ce qui permet de mesurer des déplacements de l'ordre de quelque dizaines de longueurs de battement.

Par exemple, avec une fibre biréfringente de longueur de battement Lb = 1 mm, on peut mesurer un déplacement de 100 mm correspondant à 100 franges. La précision de lecture du système de franges peut être extrême, mais une mesure simple au dixième de frange, par exemple, permet une précision sur le déplacement de 100/1000 = 0,1 mm, soit une précision relative de $10^{-3}$.

La visualisation (au sens de la mesure interférométrique) des trois points de couplages nécessaires à la mesure du capteur est obtenue par l'utilisation d'une source lumineuse présentant une faible cohérence.

La figure 4, représente un exemple de réalisation détaillé du capteur de déplacement selon l'invention.

La source 1 émet une onde polarisée linéairement Py dans la fibre 1. Cette onde subit un premier couplage au point de couplage fixe A, puis un deuxième couplage au point de couplage mobile M, et enfin un troisième couplage au point de couplage fixe B. L'effet de ces différents couplages est tel que cela a été décrit en relation avec la figure 3.

Après le point de couplage B, les trains d'ondes primaire et couplés sont recalés suivant le même état de polarisation sur une fibre 2' de déport vers le détecteur 3. Ainsi les effets perturbateurs pouvant influencer la fibre 2' sont sans effet sur les retards induits, dans l'élément de fibre 2, sur les trains d'ondes couplés. Un polariseur 4 couplé à la fibre 2' et placé à l'entrée du détecteur 3 permet alors d'éliminer les effets perturbateurs.

Le polariseur 4 transmet ainsi quatre trains d'ondes dont les directions de polarisation $Py_{B4}$, $Px_{B4}$, $Px_{M4}$ et $Px_{A4}$ sont parallèles.

Ces trains d'ondes sont envoyés à un interféromètre de type Michelson possédant un miroir 5 semi-réfléchissant d'entrée qui retransmet la lumière provenant du polariseur 3 vers un miroir 6 et un miroir 7. Après réflexion par ces miroirs 6 et 7, les trains d'ondes sont renvoyés dans un bras de mesure 9 où ils interfèrent. Un dispositif de mesure 8 permet de mesurer les interférences entre les trains d'ondes réfléchis par les deux miroirs 6 et 7.

Le miroir 6 est mobile en translation selon la direction du faisceau lumineux provenant du miroir semi-réfléchissant 5. Les chemins optiques comprenant les miroirs 6 et 7 peuvent donc être de longueurs différentes et leur décalage permet de ramener en coïncidence les trains d'ondes de façon à créer des interférences. La figure 6 représente, à titre d'exemple, sur la ligne a, les trains d'ondes retransmis par le miroir 6 et, sur la ligne b, les trains d'ondes retransmis par le miroir 7.

L'interférence du train d'onde $Px_{B4}$ réfléchi par le miroir 6 et du train d'onde $Py_{B4}$ réfléchi par le miroir 7 donne lieu à une interférence.

La différence de longueurs des chemins optiques dans l'interféromètre est lié au retard entre les deux trains d'ondes primaire ($Py_{B4}$) et couplé ($Px_{B4}$).

La localisation des autres trains d'ondes couplés $Px_{A4}$ et $Px_{M4}$ se fait de la même façon. La position relative du train d'onde couplé $Px_{M4}$ par rapport aux trains d'ondes $Px_{A4}$ et $Px_{B4}$ fournit la position relative du point de couplage mobile M par rapport aux points de couplage fixes A et B.

Dans l'interféromètre de la figure 4, on a prévu un miroir 6 mobile, cependant tout moyen permettant de rendre variable la longueur du trajet optique dans au moins un bras de l'interféromètre pourrait convenir.

Le capteur de déplacement de l'invention utilise donc les propriétés des fibres optiques monomodes à conservation de polarisation linéaire et celles liées à la présence de points de couplages de polarisation contrôlés et longitudinalement répartis. L'accès à la mesure du déplacement est obtenu par une lecture de type interférométrique.

Un capteur élémentaire est constitué d'un segment de fibre optique monomode biréfringente borné par deux points de couplage intrinsèques (à la fibre) et d'un point de couplage mobile situé sur ce segment. Le point de couplage mobile extrinsèque est non-contact et est, par exemple, induit par effet Faraday. Le procédé de la lecture est interférométrique, et la source lumineuse utilisée présente une faible cohérence. Il est important que la longueur de cohérence de la source dans la fibre optique 2 soit inférieure à la distance qui sépare deux points de couplage adjacents. Notamment dans le cadre de la mesure du déplacement du point mobile M, il convient que la longueur de cohérence de la source 1 soit inférieure à la distance minimale pouvant séparer ce point mobile M du point fixe A ou B le plus proche.

Pour la réalisation d'un capteur de déplacement où le point de couplage mobile M se déplace entre les deux points de couplage fixes A et B, comme cela est représenté en figure 4, la distance séparant les deux points de couplage fixes A et B doit être supérieure à deux fois la longueur de cohérence de la source augmentée de la distance maximale selon laquelle le point mobile M doit pouvoir se déplacer.

Il est à noter que dans ce qui précède on a supposé que le point mobile M était situé entre les points A et B, cependant l'invention est également applicable à un capteur dans lequel le point M ne serait pas situé entre les points A et B. Dans ce cas la distance séparant les points fixes A et B ainsi que celle séparant le point mobile M du point fixe (A ou B) le plus proche doivent être supérieures à la longueur de cohérence de la source.

Le relevé interférométrique des positions relatives du point de couplage mobile par rapport aux points de couplage fixes permet de mesurer le déplacement et de s'affranchir des effet éventuels de la température sur la biréfringence de la fibre utilisée.

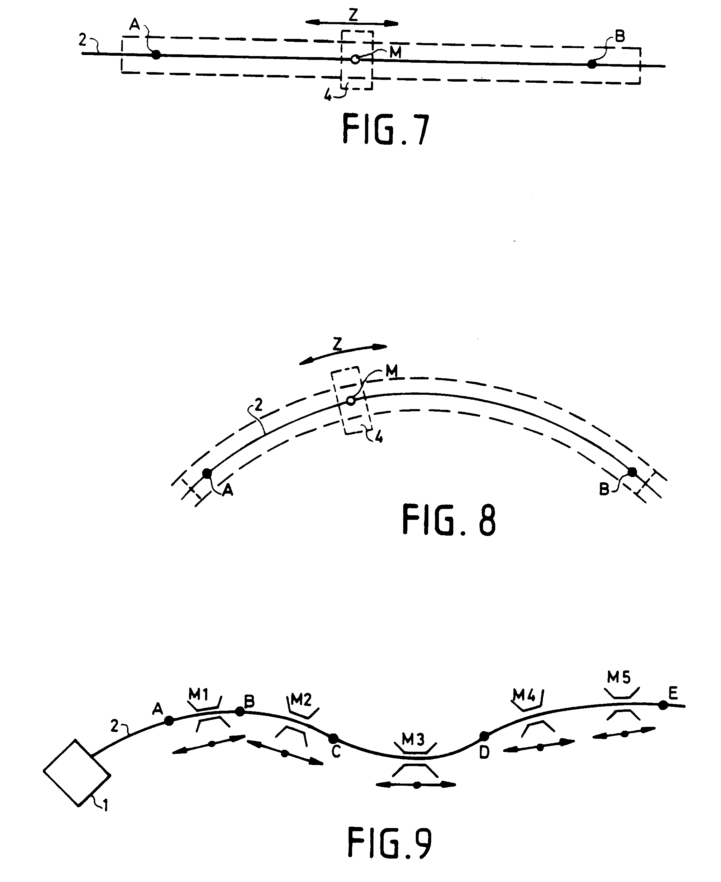

Le capteur de l'invention est applicable à un capteur de déplacement linéaire tel que représenté sur la figure 7. La fibre 2 est rectiligne entre les points de couplage fixes A et B. Le dispositif 4 provoquant un couplage au point M de la fibre 2, est mobile rectilignement selon la flèche Z. Le capteur de l'invention mesure donc un déplacement linéaire.

Le capteur de l'invention est également applicable à un capteur de déplacement angulaire tel que représenté sur la figure 8. La fibre est courbée entre les points de couplage fixes A et B. Le dispositif 4 provoquant un couplage au point M de la fibre 2 est mobile selon l'axe de la fibre comme indiqué par la flèche Z. Le capteur de l'invention mesure donc un déplacement angulaire qui peut être traduit, si besoin en un un angle de rotation.

Comme cela est représenté en figure 9, le capteur de l'invention peut également être appliqué à un capteur comportant plusieurs points de couplage mobiles. Dans ce cas on peut prévoir, dans la fibre optique 2, plusieurs points de couplages fixes A, B, C, D, E. Chaque portion de fibre délimitée par ces points de couplages fixes pouvant comporter un seul point de couplage mobiles M1, M2, M3 ou voire plusieurs points de couplage mobiles, tels que M4 et M5 pour la portion comprise entre les points de couplage fixes D et E.

En application de ce qui précède, la longueur de cohérence de la source 1 dans la fibre 2 doit être inférieure à la distance entre deux points de couplage fixes ou mobile adjacents de la fibre 2.

Le capteur de l'invention présente ainsi, outre la précision relative de la mesure de déplacement par exemple ($10^{-3}$), une possibilité de multiplexage de mesures. De plus, il permet de déporter à une grande distance (plusieurs centaines de mètres) le capteur (portion de fibre située entre les points de couplage fixes A et B) à partir du détecteur 3 (interféromètre).

Il est bien évident que la description qui précède n'a été faite qu'à titre d'exemple. Les exemples numériques notamment n'ont été fournis que pour illustrer la description. D'autres variantes peuvent être envisagées sans sortir du cadre de l'invention comme défini dans les revendications.

**Revendications**

1. Capteur de déplacements à fibre optique, comportant :
   – une source optique (1) de lumière polarisée linéairement selon un axe de polarisation ;
   – une fibre optique biréfringente (2) dont une face d'entrée est couplée à la source optique (1) avec un axe de biréfringence aligné sur l'axe de polarisation de la lumière émise par la source optique, cette fibre optique possédant au moins deux points de couplage (A, B) entre les deux axes de propagation lent et rapide, localisés, fixes et espacés d'une distance (L) déterminée ;

– au moins un moyen de couplage mobile entre les deux axes de propagation lent et rapide, permettant d'induire un couplage, en un point de couplage mobile (M) de la fibre, entre les deux axes de polarisation de la fibre ;

– un moyen d'analyse (3) couplé à la sortie de la fibre et permettant de détecter les interférences dues aux différents couplages (A, B, M) induits dans la fibre (1).

2. Capteur de déplacement à fibre optique selon la revendication 1, caractérisé en ce que la source optique 1 émet un faisceau lumineux de faible cohérence.

3. Capteur de déplacement à fibre optique selon la revendication 2, caractérisé en ce que la source optique (1) émet un faisceau lumineux dont la longueur de cohérence dans la fibre est inférieure à la distance séparant deux points de couplage consécutifs.

4. Capteur de déplacement à fibre optique selon la revendication 3, caractérisé en ce que la source optique (1) émet un faisceau lumineux dont la longueur de cohérence dans la fibre est inférieure à la distance minimale pouvant séparer le point de couplage mobile M du point de couiplage fixe (A ou B) le plus proche.

5. Capteur de déplacement à fibre optique selon la revendication 1, caractérisé en ce que le point de couplage mobile (M) est situé entre les deux points de couplage fixes (A, B).

6. Capteur de déplacement à fibre optique selon la revendication 1, caractérisé en ce que le moyen d'analyse (3) comporte un système permettant d'aligner selon une même direction d'analyse les différents trains d'ondes issus de la fibre (2) de façon à ce que les trains d'ondes primaires ($Py_{B3}$) polarisés selon un axe neutre de la fibre et des trains d'ondes couplés ($Px_{A3}$, $Px_{M3}$, $Px_{B3}$) polarisés selon l'autre axe neutre de la fibre (2) soient orientés selon une même direction.

7. Capteur de déplacement à fibre optique selon la revendication 6, caractérisé en ce que le moyen d'analyse (3) comporte un interféromètre (5, 6, 7, 8, 9) possédant un bras (5, 6) de chemin optique variable.

8. Capteur de déplacement à fibre optique, selon la revendication 1, caractérisé en ce que le moyen de couplage mobile M comporte un dispositif inducteur de champ magnétique induisant un effet Faraday dans la fibre optique (2).

9. Capteur de déplacement à fibre optique selon la revendication 1, caractérisé en ce que le moyen de couplage mobile (M) comporte un dispositif mécanique exerçant une contrainte mécanique sur la fibre (2).

10. Capteur de déplacement à fibre optique selon la revendication 1, caractérisé en ce que le moyen de couplage mobile (M) comporte un dispositif de chauffage permettant de chauffer localement la fibre (2).

11. Capteur de déplacement à fibre optique selon la revendication 8, caractérisé en ce que le moyen de couplage (M) induit un champ magnétique colinéaire avec l'axe de la fibre (2).

12. Capteur de déplacement à fibre optique selon la revendication 1, caractérisé en ce que la fibre 2 est une fibre monomode à conservation de polarisation linéaire

13. Capteur de déplacement à fibre optique selon la revendication 1, caractérisé en ce que la fibre (2) est rectiligne de façon à ce que le capteur mesure des déplacements linéaires du moyen de couplage mobile (M).

14. Capteur de déplacement à fibre optique selon la revendication 1, caractérisé en ce que la fibre (2) est courbe de façon à ce que le capteur mesure des déplacements angulaires du moyen de couplage mobile (M).

## Patentansprüche

1. Bewegungsmeßwertaufnehmer mit Lichtleitfaser, mit:

– einer Lichtquelle (1) für entlang einer Polarisationsachse linear polarisiertes Licht;

– einer doppelbrechenden Lichtleitfaser (2), von der eine Eingangsseite mit der Lichtquelle (1) gekoppelt ist, wobei eine Doppelbrechungsachse auf die Polarisationsachse des von der Lichtquelle emittierten Lichtes ausgerichtet ist und wobei diese Lichtleitfaser wenigstens zwei Kopplungspunkte (A, B) zwischen den zwei Ausbreitungsachsen, der langsamen und der schnellen Achse, besitzt, die räumlich begrenzt und fest sind und sich in einem bestimmten Abstand (L) voneinander befinden;

– wenigstens einem beweglichen Kopplungsmittel zwischen den zwei Ausbreitungsachsen, der langsamen und der schnellen Achse, das die Herstellung einer Kopplung zwischen den zwei Polarisationsachsen der Faser an einem beweglichen Kopplungspunkt (M) der Faser erlaubt;

– einem Analysemittel (3), das mit dem Ausgang der Faser gekoppelt ist und die Erfassung der Interferenzen erlaubt, die an den verschiedenen in der Faser (1) hergestellten Kopplungen (A, B, M) hervorgerufen werden.

2. Bewegungsmeßwertaufnehmer mit Lichtleitfaser gemäß Anspruch 1, dadurch gekennzeichnet, daß die Lichtquelle (1) ein schwach kohärentes Lichtbündel emittiert

3. Bewegungsmeßwertaufnehmer mit Lichtleitfaser gemäß Anspruch 2, dadurch gekennzeichnet, daß die Lichtquelle (1) ein Lichtbündel emittiert, dessen Kohärenzlänge in der Faser geringer als der Abstand ist, der zwei aufeinanderfolgende Kopplungspunkte trennt,

4. Bewegungsmeßwertaufnehmer mit lichtleitfaser gemäß Anspruch 3, dadurch gekennzeichnet, daß die Lichtquelle (1) ein Lichtbündel emittiert, dessen Kohärenzlänge in der Faser geringer als der minimale Abstand ist, um den der bewegliche Kopplungspunkt (M) vom nächstgelegenen festen Kopplungspunkt (A oder B) getrennt sein kann.

5. Bewegungsmeßwertaufnehmer mit Lichtleitfaser gemäß Anspruch 1, dadurch gekennzeichnet, daß sich der bewegliche Kopplungspunkt (M) zwischen den zwei festen Kopplungspunkten (A, B) befindet.

6. Bewegungsmeßwertaufnehmer mit Lichtleitfaser gemäß Anspruch 1, dadurch gekennzeichnet, daß das Analysemittel (3) ein System umfaßt, das die von der Faser (2) ausgegebenen, verschiedenen Wellenzüge entlang derselben Analyserichtung auszurichten erlaubt, derart, daß die entlang einer neutralen Achse der Faser polarisierten primären Wellenzüge ($Py_{B3}$) und die entlang der anderen neutralen Achse der Faser (2) polarisierten, gekoppelten Wellenzüge ($Px_{A3}$, $Px_{M3}$, $Px_{B3}$) in derselben Richtung orientiert sind.

7. Bewegungsmeßwertaufnehmer mit Lichtleitfaser gemäß Anspruch 6, dadurch gekennzeichnet, daß die Analysemittel (3) ein Interferometer (5, 6, 7, 8, 9) umfaßt, das einen Zweig (5, 6) mit variablem optischen Weg besitzt.

8. Bewegungsmeßwertaufnehmer mit Lichtleitfaser gemäß Anspruch 1, dadurch gekennzeichnet, daß das bewegliche Kopplungsmittel (M) einen Magnetfeldinduktionseinrichtung umfaßt, die in der Lichtleitfaser (2) einen Faraday-Effekt induziert.

9. Bewegungsmeßwertaufnehmer mit Lichtleitfaser gemäß Anspruch 1, dadurch gekennzeichnet, daß das bewegliche Kopplungsmittel (M) eine mechanische Einrichtung umfaßt, die auf die Faser (2) eine mechanische Belastung ausübt.

10. Bewegungsmeßwertaufnehmer mit Lichtleitfaser gemäß Anspruch 1, dadurch gekennzeichnet, daß das bewegliche Kopplungsmittel (M) eine Heizeinrichtung umfaßt, die die lokale Erwärmung der Faser (2) erlaubt.

11. Bewegungsmeßwertaufnehmer mit Lichtleitfaser gemäß Anspruch 8, dadurch gekennzeichnet, daß das Kopplungsmittel (M) ein mit der Achse der Faser (2) kollineares Magnetfeld induziert.

12. Bewegungsmeßwertaufnehmer mit Lichtleitfaser gemäß Anspruch 1, dadurch gekennzeichnet, daß die Faser (2) eine Einmodenfaser mit Aufrechterhaltung der linearen Polarisation ist.

13. Bewegungsmeßwertaufnehmer mit Lichtleitfaser gemäß Anspruch 1, dadurch gekennzeichnet, daß die Faser (2) geradlinig ist, derart, daß der Meßwertaufnehmer die linearen Bewegungen des beweglichen Kopplungsmittels (M) mißt.

14. Bewegungsmeßwertaufnehmer mit Lichtleitfaser gemäß Anspruch 1, dadurch gekennzeichnet, daß die Faser (2) gekrümmt ist, derart, daß der Meßwertaufnehmer die Winkelbewegungen des beweglichen Kopplungsmittels (M) mißt.

## Claims

1. An optical fiber displacement sensor, comprising:
– an optical source (1) of light which is linearly polarized along a polarization axis;
– a birefringent optical fiber (2) whose one input surface is coupled with the optical source (1) with one axis of birefringence in alignment with the axis of polarization of the light emitted by the optical source, said optical fiber possessing at least two coupling points (A and B) between the two axes of slow and fast propagation, same being localized, fixed and spaced at a predetermined distance (L) apart;
– at least one moving coupling means between the two axes of fast and slow propagation, rendering possible the induction of a coupling, at a moving coupling point (M) on the fiber the two axes of polarization of the fiber;
– an analysis means (3) coupled with the output of the fiber and rendering possible detection of interference due to the different couplings (A, B and M) induced in the fiber (1).

2. The optical fiber displacement sensor as claimed in claim 1, characterized in that the optical source 1 emits a light beam with a low coherence.

3. The optical fiber displacement sensor as claimed in claim 2, characterized in that optical source (1) emits a light beam whose length of coherence in the fiber is less than the distance separating two successive coupling points.

The optical fiber displacement sensor as claimed in claim 3, characterized in that the optical source (1) emits a light beam whose length of coherence in the fiber is less than the minimum distance which may separate the moving points of coupling M from the fixed point of coupling (A or B) which is nearest.

5. The optical fiber displacement sensor as claimed in claim 1, characterized in that the moving point (M) of coupling is positioned between the two fixed points (A and B) of coupling.

6. The optical fiber displacement sensor as claimed in claim 1, characterized in that the analysis means (3) comprises a system rendering possible alignment in the same direction of analysis of the different wave trains coming from the fiber (2) in such a manner that the trains of primary waves $(PY_{B3})$ polarized on a neutral axis of the fiber and the trains of coupled waves $(Px_{A3}, Px_{M3}$ and $Px_{B3})$ polarized on the other neutral axis of the fiber (2) have an alignment in the same direction.

7. The optical fiber displacement sensor as claimed in claim 6, characterized in that the analysis means (3) comprises an interferometer (5, 6, 7, 8 and 9) including an an adjustable arm (5 and 6) of the optical path (2).

8. The optical fiber displacement sensor as claimed in claim 1, characterized in that the moving coupling means M comprises a magnetic field induding device inducing a Faraday effect in the optical fiber (2).

9. The optical fiber displacement sensor as claimed in claim 1, characterized in that the moving coupling means (M) comprises a mechanical device for inducing a mechanical strain in the fiber (2).

10. The optical fiber displacement sensor as claimed in claim 1, characterized in that the moving coupling means (M) comprises a heating device rendering possible localized heating of the fiber (2).

11. The optical fiber displacement sensor as claimed in claim 8, characterized in that the couling means induces a magnetic field aligned with the axis of the fiber (2).

12. The optical fiber displacement sensor as claimed in claim 1, characterized in that the fiber 2 is a monomodal fiber maintaining a linear polarization.

13. The optical fiber displacement sensor as claimed in claim 1, characterized in that the fiber (2) is straight so that the sensor measures linear displacements of the moving coupling means (M).

14. The optical fiber displacement sensor as claimed in claim 1, characterized in that the fiber is curved so that the sensor measures angular displacements of the moving coupling means (M).

13

ELEMENT TRANSDUCTEUR

12

10

SOURCE

11 FIBRE DE
REFERENCE

VERS SYSTEME
DE LECTURE

# FIG.1

15

10

SOURCE

ELEMENT SENSIBLE
AU DEPLACEMENT

16

17

DETECTEUR

# FIG.2

FIG.3

FIG.4

EP 0 338 902 B1

# FIG. 5

# FIG. 6

FIG.7

FIG. 8

FIG.9